# EUROPÄISCHE PATENTSCHRIFT

(11) **EP 0 752 346 B1**
(45) Veröffentlichungstag und Bekanntmachung des Hinweises auf die Patenterteilung: **11.08.1999**
(21) Anmeldenummer: 96110381.9
(22) Anmeldetag: 27.06.1996
(51) Int. Cl.: B60R 21/16

(54) **Beifahrerseitiger Gassack**
Passenger airbag
Sac gonflable pour passager

(30) Priorität: 03.07.1995 DE 29510775 U
(43) Veröffentlichungstag der Anmeldung: 08.01.1997
(73) Patentinhaber: TRW Occupant Restraint Systems GmbH & Co. KG, 73551 Alfdorf (DE)
(72) Erfinder: Lang, Norbert, 73575 Leinzell (DE)
(74) Vertreter: Degwert, Hartmut, Dipl.-Phys.

(56) Entgegenhaltungen:
- EP-A- 0 714 813
- DE-A- 4 314 347
- GB-A- 2 289 242
- US-A- 4 988 118
- PATENT ABSTRACTS OF JAPAN vol. 018, no. 682 (M-1729), 22.Dezember 1994 & JP-A-06 270756 (TOYO TIRE & RUBBER CO LTD;OTHERS: 01), 27.September 1994,

## Beschreibung

Die Erfindung betrifft einen beifahrerseitigen Gassack, der aus einem Mantelteil und zwei mit diesem verbundenen Seitenteilen besteht.

Gemäß herkömmlicher Technik wird ein solcher Gassack aus drei Gewebeteilen zusammengesetzt, die entlang ihren Berandungen miteinander vernäht werden. Auf den Zuschnitt der drei Textilteile und auf die Anfertigung der Nähte zur Verbindung der Textilteile miteinander entfällt ein erheblicher Anteil des Herstellungsaufwandes für den Gassack. Die Nähte werden am aufgeblasenen Gassack besonders im dem Insassen zugewandten Bereich hoch beansprucht, da die auftretenden Kräfte überwiegend quer zu den Nähten orientiert sind. Schließlich wird der Fertigungsaufwand für den Gassack dadurch erhöht, daß beim Zusammenfügen der Gewebeteile auf deren richtige Lage und Orientierung zueinander geachtet werden muß.

Durch die DE-A-4314347 ist auch schon ein Gassack gemäß dem Oberbegriff des Anspruchs 1 bekannt.

Durch die Erfindung wird ein gattungsgemäßer beifahrerseitiger Gassack zur Verfügung gestellt, dessen Herstellung einfach ist und bei dem Mantelteil und Seitenteile in dem beim Entfalten des Gassacks dem Insassen zugewandten Bereich keiner Nahtverbindung bedürfen, die hohen Querbeanspruchungen ausgesetzt wäre. Gemäß der Erfindung sind bei einem beifahrerseitigen Gassack, der aus einem Mantelteil und zwei mit diesem verbundenen Seitenteilen besteht, Mantelteil und beide Seitenteile aus einem einteiligen Zuschnitt eines ebenen Textilgewebes gebildet, wobei der Zuschnitt einen dem Mantelteil entsprechenden, langgestreckten Mittelabschnitt und zwei an seinem mittleren Bereich seitlich angeschlossene, den Seitenteilen entsprechende Lappen aufweist und jeder Lappen entlang seiner Berandung mit der benachbarten Längsberandung des Mittelabschnitts vernäht ist. Der Gassack wird aus einem einzigen Gewebezuschnitt gebildet, wodurch der Aufwand für das Zuschneiden insgesamt gering ist. Die Seitenteile sind zwangsläufig korrekt zu dem Mantelteil orientiert und angeordnet, so daß keine Gefahr eines falschen Zusammenbaus besteht. Schließlich fallen nur wenig Näharbeiten an, und der Fadenverbrauch ist entsprechend gering.

Weitere Vorteile und Merkmale der Erfindung ergeben sich aus den Unteransprüchen sowie aus der folgenden Beschreibung einer vorteilhaften Ausführungsform, wobei auf die beigefügten Zeichnungen Bezug genommen wird. In den Zeichnungen zeigen:
- Figur 1 einen Zuschnitt zur Herstellung des Gassacks; und
- Figur 2 eine Perspektivansicht des aufgeblasenen Gassacks.

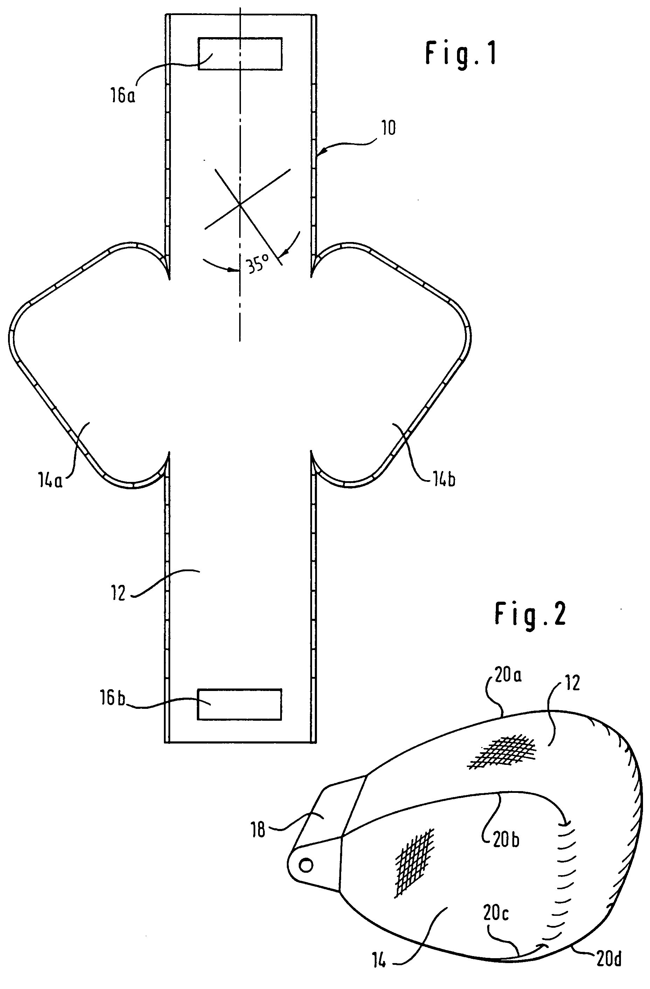

Zur Herstellung eines beifahrerseitigen Gassacks wird der in Figur 1 gezeigte Zuschnitt 10 aus einem ebenen Textilgewebe angefertigt. Dieser Zuschnitt 10 besteht aus einem langgestreckten Mittelabschnitt 12 und zwei am mittleren Bereich dieses Mittelabschnitts 10 seitlich angeschlossenen Lappen 14a, 14b. Diese Lappen 14a, 14b haben die Form eines rechtwinkligen Dreiecks mit gerundeten Ecken. Die Berandungen der Lappen 14a, 14b und des Mittelabschnitts 12 stoßen unter einem spitzen Winkel aufeinander.

An den beiden Enden des langgestreckten Mittelabschnitts 12 befindet sich je ein rechteckförmiger Ausschnitt 16a, 16b. Diese Ausschnitte 16a, 16b bilden die Einblasöffnung des Gassacks. Die Enden des Mittelabschnitts 12, in denen die Ausschnitte 16a, 16b angebracht sind, werden zur Befestigung des Gassacks an einem den Gasgenerator aufnehmenden Gehäuse 18 (Figur 2) übereinandergelegt. Die Scheitel der Lappen 14a, 14b liegen an den Schmalseiten der Einblasöffnung des Gassacks an und tragen zu ihrer Berandung bei. Durch die gewählte Orientierung der Kett- oder Schußfäden unter 35° zur Längsrichtung des Mittelabschnitts 12 ist gewährleistet, daß in den Scheitelbereichen der Lappen 14a, 14b die Kett- und Schußfäden unter etwa 45° zur Berandung der Einblasöffnung orientiert sind, wodurch sich eine günstige Lastverteilung ergibt.

Wie in Figur 2 gezeigt ist, sind der Mittelabschnitt 12 und die Lappen 14a, 14b entlang ihren benachbarten Berandungen miteinander vernäht. Die entsprechenden Nähte sind in Figur 2 mit 20a, 20b, 20c und 20d bezeichnet. Sie erstrecken sich vom Gehäuse 18 ausgehend bis in denjenigen Bereich des Gassacks, der im aufgeblasenen Zustand dem Insassen zugewandt ist. In diesem dem Insassen zugewandten Bereich sind keine Nähte vorhanden, im Gegensatz zur herkömmlichen Gassackausbildung.

## Patentansprüche

1. Beifahrerseitiger Gassack, der aus einem Mantelteil und zwei mit diesem verbundenen Seitenteilen besteht, wobei Mantelteil und beide Seitenteile aus einem einteiligen Zuschnitt (10) eines ebenen Textilgewebes gebildet sind, wobei der Zuschnitt einen dem Mantelteil entsprechenden, langgestreckten Mittelabschnitt (12) und zwei seitlich angeschlossene, den Seitenteilen entsprechende Lappen (14a, 14b) aufweist und jeder Lappen entlang seiner Berandung mit der benachbarten Längsberandung des Mittelabschnitts (12) vernäht ist, dadurch gekennzeichnet, daß die Lappen (14a, 14b) am mittleren Bereich des Mittelabschnitts (12) angeschlossen sind.

2. Gassack nach Anspruch 1, dadurch gekennzeichnet, daß die Berandungen der Lappen (14a, 14b) und des Mittelabschnitts (12) unter einem spitzen Winkel aufeinanderstoßen.

3. Gassack nach Anspruch 1 oder 2, dadurch gekennzeichnet, daß die Lappen (14a, 14b) des Zuschnitts (10) annähernd die Form eines rechtwinkligen Dreiecks mit gerundeten Ecken aufweisen.

4. Gassack nach einem der Ansprüche 1 bis 3, dadurch gekennzeichnet, daß die Kett- oder Schußfäden des Textilgewebes um etwa 35° zur Längsrichtung des Mittelabschnitts (12) geneigt sind.

## Claims

1. A passenger side gas bag comprising an envelope part and two lateral parts connected with same, the envelope part and the two lateral parts being formed from an integral blank (10) of flat textile fabric, the blank having an elongated middle section (12) corresponding to the envelope part, and two laterally joined flaps (14a, 14b) corresponding to the lateral parts, each flap being sewn along its edge to the adjacent longitudinal edge of the middle section (12), characterized in that the flaps (14a, 14b) are joined to the middle portion of the middle section (12).

2. The gas bag as claimed in claim 1, characterized in that the edges of the flaps (14a, 14b) and of the middle section (12) run together at an acute angle.

3. The gas bag as claimed in claim 1 or 2, characterized in that the flaps (14a, 14b) of the blank (10) generally possess the configuration of a right-angled triangle with rounded corners.

4. The gas bag as claimed in any one of the claims 1 to 3, characterized in that the warp or weft threads of the textile fabric are inclined at approximately 35° to the longitudinal direction of the middle section (12).

## Revendications

1. Coussin à gaz côté passager avant, constitué d'une partie enveloppante et de deux parties latérales qui y sont reliées, la partie enveloppante et les deux parties latérales étant réalisées à partir d'une pièce découpée d'un seul tenant (10) en tissu textile plan, la pièce découpée comportant une portion centrale allongée (12), qui correspond à la partie enveloppante, et deux pattes (14a, 14b) qui sont reliées latéralement et correspondent aux parties latérales, et chaque patte étant cousue, le long de son bord, au bord longitudinal voisin de la portion centrale (12), caractérisé en ce que les pattes (14a, 14b) sont raccordées à la zone centrale de la portion centrale (12).

2. Coussin à gaz selon la revendication 1, caractérisé en ce que les bords des pattes (14a, 14b) et de la portion centrale (12) se rencontrent en formant un angle aigu.

3. Coussin à gaz selon la revendication 1 ou 2, caractérisé en ce que les pattes (14a, 14b) de la pièce découpée (10) présentent sensiblement la forme d'un triangle rectangle à coins arrondis.

4. Coussin à gaz selon l'une des revendications 1 à 3, caractérisé en ce que les fils de chaîne ou de trame du tissu textile sont inclinés d'environ 35° par rapport à la direction longitudinale de la portion centrale (12).
